# EUROPÄISCHE PATENTANMELDUNG

(11) **EP 4 694 045 A1**
(43) Veröffentlichungstag der Anmeldung: **11.02.2026**
(21) Anmeldenummer: 24193365.4
(22) Anmeldetag: 07.08.2024
(51) Int. Cl.: H04L 12/66, H04L 67/12

(54) **ETHERNET-APL GATEWAY**

(71) Anmelder: Siemens Aktiengesellschaft, 80333 München (DE)
(72) Erfinder: Griesbaum, Wilhelm, 76829 Landau (DE); Sagert, Markus, 76137 Karlsruhe (DE)
(74) Vertreter: Siemens Patent Attorneys

(57) **Zusammenfassung**

Vorgeschlagen wird ein Gerät (3), welches eine Mehrzahl von Schnittstellen (5a, 5b, 5c) zur Verbindung (6a, 6b, 6c) mit Feldgeräten (4a, 4b, 4c) einer technischen Anlage, insbesondere Prozess- oder Fertigungsanlage, auf Basis von Ethernet-APL und PROFINET aufweist, und welches eine Schnittstelle (7) zur Verbindung (8) mit einem übergeordneten Automatisierungsgerät (2) der technischen Anlage auf Basis von PROFINET aufweist, wobei das Gerät (3) dazu ausgebildet ist, als ein Kommunikationsswitch zwischen dem übergeordneten Automatisierungsgerät (2) und den Feldgeräten (4a, 4b, 4c) zu agieren.

Das Gerät (3) ist dadurch gekennzeichnet, dass es dazu ausgebildet ist, im Rahmen der Verbindung (8) mit dem übergeordneten Automatisierungsgerät (2) als ein PROFINET IO-Device zu agieren, und im Rahmen der Verbindung (6a, 6b, 6c) mit den Feldgeräten (4a, 4b, 4c) als ein PROFINET IO-Controller zu agieren, um im Rahmen der Verbindungen (6a, 6b, 6c) mit den Feldgeräten (4a, 4b, 4c) und dem übergeordneten Automatisierungsgerät (2) als ein Ethernet-APL Gateway zu agieren.

## Beschreibung

Die Erfindung betrifft ein Gerät, welches eine Mehrzahl von Schnittstellen zur Verbindung mit Feldgeräten einer technischen Anlage, insbesondere Prozess- oder Fertigungsanlage, auf Basis von Ethernet-APL und PROFINET aufweist, und welches eine Schnittstelle zur Verbindung mit einem übergeordneten Automatisierungsgerät der technischen Anlage auf Basis von PROFINET aufweist, wobei das Gerät dazu ausgebildet ist, als ein Kommunikationsswitch zwischen dem übergeordneten Automatisierungsgerät und den Feldgeräten zu agieren. Außerdem betrifft die Erfindung ein Automatisierungsgerät und ein Verfahren zum Betrieb einer technischen Anlage, insbesondere Fertigungs- oder Prozessanlage.

Es ist davon auszugehen, dass Ethernet-APL (Advanced Physical Layer) sich in der Prozessindustrie mehr und mehr durchsetzen wird. Die Vorteile sind dabei bedeutend: Wenn auch die letzten Meter zum Feldgerät mit Ethernet-Technologie verbunden werden, kann eine deutlich höhere Kommunikationsperformance als z.B. mit HART erreicht werden.

Die Feldgeräte sind bei den heutigen Konzepten eigenständige Busteilnehmer und führen z.B. bei PROFINET zu einer hohen Teilnehmeranzahl am Automatisierungssystem. Bekannte Automatisierungsgeräte wie die AS410 der Firma SIEMENS weisen das Problem auf, dass sie nicht oder nur mit hohem Aufwand dasselbe Mengengerüst an Feldgeräten in PROFINET-APL abbilden können, wie es aktuell mit HART oder PROFIBUS möglich ist. Dies beruht hauptsächlich auf dem zusätzlichen Kommunikations- und Berechnungsaufwand, den die PROFINET-APL Geräte in dem Automatisierungsgerät erzeugen.

In der Automatisierungstechnik sind sogenannte APL-Switche bekannt, die zwischen den einzelnen APL-fähigen Feldgeräten und einem übergeordneten Automatisierungsgerät angeordnet sind. In der DE 10 2021 101 498 A1 ist solch ein APL-Switch offenbart. Jedes Feldgerät weist dabei eine logische Verbindung direkt zu dem Automatisierungsgerät auf, was den Kommunikations- und Berechnungsaufwand für das Automatisierungsgerät hoch gestaltet.

Der Erfindung liegt die Aufgabe zugrunde, die Kommunikation zwischen einem Automatisierungsgerät und Feldgeräten unter Nutzung von APL effizienter zu gestalten.

Diese Aufgabe wird gelöst durch ein Gerät mit den Merkmalen des Anspruchs 1. Außerdem wird die Aufgabe gelöst durch ein Automatisierungssystem gemäß Anspruch 11, ein Verfahren zum Betrieb einer technischen Anlage gemäß Anspruch 13 und ein Verfahren zum Betrieb einer technischen Anlage gemäß Anspruch 14. Vorteilhafte Weiterbildungen ergeben sich aus den abhängigen Ansprüchen.

Das erfindungsgemäße Gerät, welches eine Mehrzahl von Schnittstellen zur Verbindung mit Feldgeräten einer technischen Anlage, insbesondere Prozess- oder Fertigungsanlage, auf Basis von PROFINET aufweist, und welches eine Schnittstelle zur Verbindung mit einem übergeordneten Automatisierungsgerät der technischen Anlage auf Basis von PROFINET aufweist, wobei das Gerät dazu ausgebildet ist, als ein Kommunikationsswitch zwischen dem übergeordneten Automatisierungsgerät und den Feldgeräten zu agieren, ist dadurch gekennzeichnet, dass es dazu ausgebildet ist, im Rahmen der Verbindung mit dem übergeordneten Automatisierungsgerät als ein PROFINET IO-Device zu agieren, und im Rahmen der Verbindung mit den Feldgeräten als ein PROFINET IO-Controller zu agieren, und dass das Gerät dazu ausgebildet ist, im Rahmen der Verbindungen mit den Feldgeräten und dem übergeordneten Automatisierungssystem als ein Ethernet-APL Gateway zu agieren.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Das Automatisierungsgerät kann, wie das Gerät, Teil eines Leitsystems sein, welches der Automatisierung der technischen Anlage dient. Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Unter einem Feldgerät wird eine technische Einrichtung im Bereich der Automatisierungstechnik verstanden, die mit einem Produktionsprozess in direkter Beziehung steht. Dabei wird mit "Feld" ein Bereich außerhalb von Schaltschränken bzw. Leitwarten bezeichnet. Feldgeräte können sowohl Aktoren (Stellglieder, Ventile etc.) als auch Sensoren (Messumformer) in der Fabrik- und Prozessautomation darstellen.

Das erfindungsgemäße Gerät weist eine Mehrzahl von Schnittstellen auf, an denen die Feldgeräte mit dem Gerät verbunden werden können. Es handelt sich dabei um auf Ethernet-APL und auf PROFINET basierende Schnittstellen, welche wiederum auf dem Ethernet-Standard beruhen. Profinet (kurz für Process Field Network) stellt dabei einen offenen Industrial-Ethernet-Standard der PROFIBUS-Nutzerorganisation e. V. (PNO) für die Automatisierung dar. APL steht für "Advanced Physical Layer" und stellt eine Weiterentwicklung der physikalischen Datenübertragung in Ethernet-Netzwerken dar. Es besteht die Möglichkeit, Ethernet-Daten über jeweils zwei Drähte zwischen den Feldgeräten und dem Gerät auszutauschen.

Die Schnittstelle des Gerätes zu dem übergeordneten Automatisierungsgerät basiert auf PROFINET. Auch hier können für die physikalische Übertragungsschicht die Spezifikationen von Ethernet zur Anwendung kommen.

Das Gerät ist dabei in an sich bekannter Weise dazu ausgebildet, als ein Kommunikationsswitch zwischen dem übergeordneten Automatisierungsgerät und den Feldgeräten zu agieren. Das Gerät stellt demnach eine Art Verteiler dar, welcher Datenpakete, die bidirektional zwischen dem Automatisierungsgerät und den Feldgeräten ausgetauscht werden, an die korrekte Zieladresse (z.B. IP-Adresse) weiterleitet.

Erfindungsgemäß ist das Gerät dazu ausgebildet, im Rahmen der Verbindung mit dem übergeordneten Automatisierungsgerät als ein PROFINET IO-Device zu agieren, und im Rahmen der Verbindung mit den Feldgeräten als ein PROFINET IO-Controller zu agieren. Dies bedeutet mit anderen Worten, dass das Gerät in der Verbindung mit dem Automatisierungsgerät als "PROFINET-Gerät" und in den Verbindungen mit den Feldgeräten jeweils als "PROFINET-Master" agiert. Dadurch kann jedes APL-fähige Feldgerät eine direkte logische Verbindung zu dem Gerät als PROFINET-Master aufweisen, wobei die physikalische Übertragung auf Ethernet-APL basiert. Gegenüber dem Automatisierungsgerät tritt das Gerät als ein einziges Gerät auf, was den Datenverkehr zwischen Automatisierungsgerät und dem Gerät deutlich geringer ausgestaltet, als wenn das Gerät ein herkömmlicher Kommunikationsswitch nach dem Stand der Technik wäre. Das erfindungsgemäße Gerät agiert hingegen im Rahmen der Verbindungen mit den Feldgeräten und dem übergeordneten Automatisierungsgerät als ein Ethernet-APL Gateway. Die Bezeichnung "Gateway" impliziert dabei, dass die von dem Gerät weitergeleiteten Daten (entweder vom Automatisierungsgerät oder von den Feldgeräten kommend) zur Weiterleitung in ihrer (Ziel-)Adressierung von dem Gerät bearbeitet werden.

Die erfindungsgemäße APL-Gateway Funktionalität in Verbindung mit einer Funktionalität als Kommunikationsswitch reduziert die Kommunikations- und Rechenlast des (zentralen) Automatisierungsgerätes. Dadurch kann das Automatisierungsgerät für einen größeren Teil der technischen Anlage verwendet werden. Die Verbindung zu den einzelnen Feldgeräten wird durch das Gerät verwaltet. Die voll integrierte Lösung aus Gateway und Switch in einem Gerät vereinfacht die Integration in größere Projekte und die Konfigurierbarkeit im Rahmen eines Engineerings der technischen Anlage, beispielweise mithilfe von SIMATIC PCS 7 oder PCS neo der Firma SIEMENS.

Die Anforderungen an die Datenübertragung zwischen dem Gerät und dem Automatisierungsgerät können relativ niedrig sein, weshalb die Schnittstelle zur Verbindung mit dem übergeordneten Automatisierungsgerät der technischen Anlage auf Basis einer PROFINET Konformitätsklasse A ausgebildet sein kann. Zwischen den Feldgeräten und dem Gerät können die Anforderungen, insbesondere aufgrund eines Explosionsschutzes, höher sein, weshalb die Schnittstellen zur Verbindung mit den Feldgeräten auf Basis einer PROFINET Konformitätsklasse B ausgebildet sein können.

Das Automatisierungsgerät kann eine speicherprogrammierbare Steuerung darstellen, insbesondere eine SIMATIC S7-410 der Firma SIEMENS. Die speicherprogrammierbare Steuerung kann spezifische Funktionen wie beispielsweise eine Ablaufsteuerung implementieren, so dass sowohl Eingangs als auch Ausgangssignale von Prozessen und Maschinen gesteuert werden können.

Im Rahmen einer vorteilhaften Weiterbildung der Erfindung ist bei dem Gerät durch eine entsprechende Eingabe über eine Nutzerschnittstelle des Gerätes, vorgebbar, unter welchen Bedingungen eine HTTPS-Verbindung von dem Automatisierungsgerät zu den Feldgeräten ermöglicht wird. Mit anderen Worten kann auf dem Gerät eine Security-Anwendung implementiert sein, die Datenpakete durch das Gerät spezifisch blockieren oder zulassen können, um beispielsweise nur bei Bedarf HTTPS-Verbindungen für ein Web-Management der Feldgeräte zu ermöglichen.

Bevorzugt weist das Gerät eine Aggregator-Funktionalität auf, um eine Filterung der von den Feldgeräten an das Automatisierungsgerät gesendeten Daten zu ermöglichen. Dadurch können zum Beispiel bestimmte Daten herausgefiltert und nicht an das Automatisierungsgerät weitergeleitet werden, um dessen Verarbeitungskapazitäten nicht unnötig zu beanspruchen.

Die Aggregator-Funktionalität kann dabei unter Einbezug eines neuronalen Netzes oder eines vergleichbaren Verfahrens erfolgen.

Besonders bevorzugt weist das Gerät eine Regleroptimierungsfunktionalität auf, um die von den Feldgeräten an das Automatisierungsgerät gesendeten Daten in Vorbereitung auf eine in dem Automatisierungsgerät nachfolgende vorzunehmende Regleroptimierung vorzuverarbeiten.

Von der Mehrzahl der Schnittstellen zu den Feldgeräten hin kann wenigstens eine Schnittstelle als Stromschleifenschnittstelle ausgebildet sein, um die Verbindung mit einem Feldgerät auf Basis eines von dem Feldgerät empfangenen elektrischen Stromes mit einer Stromstärke zwischen 4 und 20 mA zu ermöglichen.

Die Verbindung dieser Schnittstelle mit dem Feldgerät kann bevorzugt auf Basis des HART-Protokolls ausgebildet sein. Die Datenübertragung zwischen dem betreffenden Feldgerät und dem Gerät erfolgt dabei nach dem Bell-202-Standard über Frequency Shift Keying (FSK). Dem niederfrequenten analogen Signal wird eine hochfrequente Schwingung (±0,5 mA) überlagert. Eine digitale "1" wird mit der Frequenz 1,2 kHz (1200 Hz) und eine "0" wird mit der Frequenz 2,2 kHz (2200 Hz) dargestellt.

Die zuvor formulierte Aufgabe wird zudem gelöst durch ein Automatisierungssystem aufweisend ein Automatisierungsgerät und ein Gerät nach einem der vorangegangenen Ansprüche, wobei eine lösbare Verbindung zwischen dem Automatisierungsgerät und dem Gerät auf Basis von PROFINET erfolgt. Der Begriff "lösbare Verbindung" bedeutet dabei, dass die Verbindung nicht fest (verlötet/verdrahtet oder dgl.) ausgebildet ist, sondern beispielsweise durch ein Stecken in einen Steckeranschluss reversibel realisiert werden kann. Das Automatisierungsgerät und das Gerät sind dabei als physisch separierte Komponenten anzusehen, die vorzugsweise in voneinander getrennten Räumen angeordnet sind.

Das Automatisierungssystem umfasst vorzugsweise eine Vielzahl von Feldgeräten, die mit den entsprechenden Schnittstellen des Gerätes lösbar verbunden sind. Hier wird bezüglich des Begriffes "lösbar" auf die Definition im vorherigen Abschnitt verwiesen.

Das Automatisierungssystem kann zusätzlich ein System zum Bedienen und Beobachten wie einen Operator Station Server und einen Operator Station Client umfassen. Dieser ist für diesen Fall über einen Anlagenbus mit dem Automatisierungsgerät verbunden. Der Anlagenbus kann, ohne sich darauf zu beschränken, beispielsweise als Industrial Ethernet ausgebildet sein. Dabei ist der Operator Station Client dazu ausgebildet, visuelle Darstellungen zu erzeugen, die er vom Operator Station Server empfangen hat und die dem Bedienen und Beobachten der technischen Anlage dienen.

Die zuvor formulierte Aufgabe wird zudem gelöst durch ein Verfahren zum Betrieb einer technischen Anlage, insbesondere Fertigungs- oder Prozessanlage, mit einem Gerät, das wie zuvor ausgebildet ist.

Die zuvor formulierte Aufgabe wird zudem gelöst durch ein Verfahren zum Betrieb einer technischen Anlage, insbesondere Fertigungs- oder Prozessanlage, mit einem Automatisierungssystem, das wie zuvor ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: ein erfindungsgemäßes Automatisierungssystem in einer schematischen Darstellung; und
- FIG 2: ein erfindungsgemäßes Gerät in einer schematischen Darstellung.

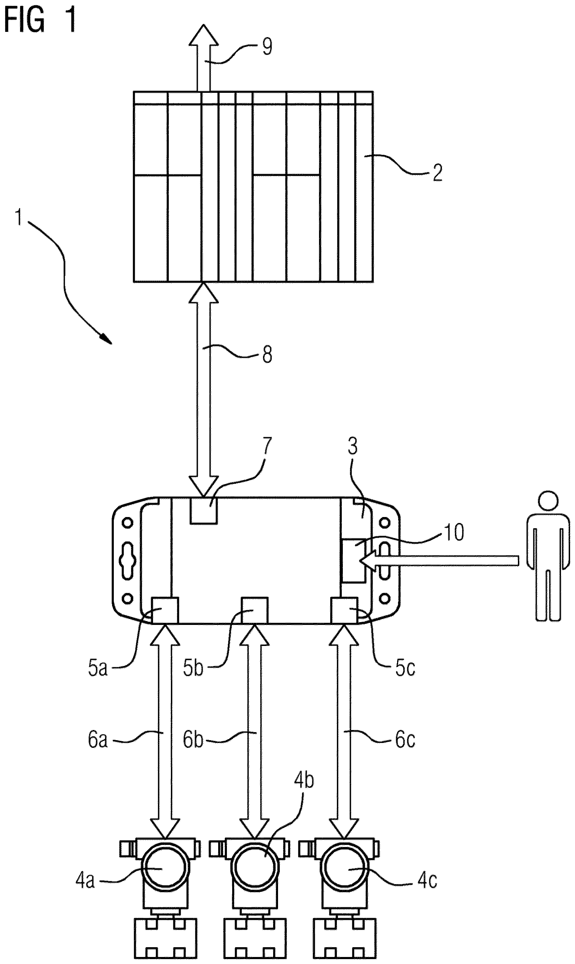

In FIG 1 ist ein Automatisierungssystem 1 für eine Prozessanlage oder eine Fertigungsanlage schematisch dargestellt. Das Automatisierungssystem 1 umfasst ein Automatisierungsgerät 2, ein Gerät 3 und eine Mehrzahl von Feldgeräten 4a, 4b, 4c. Die Feldgeräte 4a, 4b, 4c sind beispielsweise als Sensoren oder Aktoren ausgebildet.

Das Gerät 3 weist eine Mehrzahl von Schnittstellen 5a, 5b, 5c auf, die jeweils mit einem der Feldgeräte 4a, 4b, 4c lösbar verbunden sind. Eine Verbindung 6a, 6b, 6c der Schnittstellen 5a, 5b, 5c des Gerätes 3 mit den Feldgeräten 4a, 4b, 4c erfolgt jeweils auf Basis von Ethernet-APL und PROFINET.

Das Gerät 3 weist zudem eine Schnittstelle 7 auf, die über eine auf Basis von PROFINET ausgebildete, lösbare Verbindung 8 mit dem Automatisierungsgerät 2 verbunden ist. Das Automatisierungsgerät 2 ist als eine speicherprogrammierbare Steuerung ausgebildet, auf welcher ein Automatisierungsprogramm abläuft, wodurch eine Ansteuerung und Auswertung der Feldgeräte 4a, 4b, 4c erfolgt. Das Automatisierungsgerät 2 weist eine Verbindung 9 zu einem System zur Bedienung und Beobachtung, beispielsweise einem Operator Station Server und einem damit verbundenen Operator Station Client (nicht dargestellt).

Das Gerät 3 ist dazu ausgebildet, im Rahmen der Verbindung 8 mit dem übergeordneten Automatisierungsgerät 2 als ein PROFINET IO-Device zu agieren. Der Begriff "PROFINET" steht dabei für "Process Field Network". Es handelt sich dabei um einen offenen Standard für industrielles Ethernet, der von der Profibus & Profinet International (PI) und der PROFIBUS-Nutzerorganisation e.V. (PNO) verwaltet wird. Die Übertragung basiert auf Ethernet und TCP/IP. Die Datenkommunikation innerhalb von PROFINET folgt einem Provider-Consumer Modell, wobei das übergeordnete Automatisierungsgerät 2 vorliegend der Provider bzw. der IO-Controller im Sinne von PROFINET ist, während das Gerät 3 für die Verbindung 8 mit dem Automatisierungsgerät 2 der Consumer bzw. das IO-Device im Sinne von PROFINET ist.

Die Schnittstelle 7 zur Verbindung 8 mit dem übergeordneten Automatisierungsgerät 2 der technischen Anlage ist auf Basis der PROFINET Konformitätsklasse A ausgebildet. Die Konformitätsklasse A (CC-A) bei PROFINET ist die einfachste Klasse und weist den geringsten Funktionsumfang auf. Sie umfasst eine Echtzeitkommunikation und unterstützt Standard-TCP/IP Funktionalitäten und grundlegende Funktionen wie Topologieinformationen.

Das Gerät 3 ist weiterhin dazu ausgebildet, im Rahmen der Verbindungen 6a, 6b, 6c mit den Feldgeräten 4a, 4b, 4c jeweils als ein PROFINET IO-Controller zu agieren. Bei diesen Verbindungen 6a, 6b, 6c agieren die Feldgeräte 4a, 4b, 4c dementsprechend als IO-Devices im Sinne von PROFINET. Die Schnittstellen 5a, 5b, 5c zur Verbindung 6a, 6b, 6c mit den Feldgeräten 4a, 4b, 4c ist auf Basis der PROFINET Konformitätsklasse B ausgebildet. Die Funktionsklasse B schließt die Funktionen der Klasse A (s. Erläuterung zuvor) ein und umfasst zudem Funktionalitäten einer Netzwerkdiagnose und einer Topologieerkennung.

Das Gerät 3 agiert durch die zuvor erläuterte Ausprägung seiner Schnittstellen 7, 5a, 5b, 5c als ein Ethernet-APL Gateway für die mit dem Gerät 3 verbundenen Feldgeräte 4a, 4b, 4c. Dies bedeutet, dass sich die Feldgeräte 4a, 4b, 4c für eine Kommunikation mit dem Automatisierungssystem 2 an das Gerät 3 wenden, welches die Anfragen wiederum als Gateway bearbeitet, wandelt und an das Automatisierungsgerät 2 übermittelt. Die Feldgeräte 4a, 4b, 4c kommunizieren daher, im Gegensatz zu bekannten Geräten wie APL-Switches, nicht direkt mit dem Automatisierungsgerät 2, was den Datenaustausch zwischen den Feldgeräten 4a, 4b, 4c und dem Automatisierungsgerät 2 effizienter und aufwandsärmer gestaltet.

Das Gerät 3 weist eine Nutzerschnittstelle 10 auf, über die durch eine entsprechende Eingabe vorgebbar ist, unter welchen Bedingungen eine HTTPS-Verbindung von dem Automatisierungsgerät 2 zu den Feldgeräten 4a, 4b, 4c ermöglicht wird. Dies erhöht die Sicherheit der Verbindungen 8, 6a, 6b, 6c zu den Feldgeräten 4a, 4b, 4c.

Das Gerät 3 weist zudem eine Aggregator-Funktionalität auf, um eine Filterung der von den Feldgeräten (4a, 4b, 4c) an das Automatisierungsgerät (2) gesendeten Daten zu ermöglichen. Diese Aggregator-Funktionalität basiert auf dem Einbezug eines neuronalen Netzes. Durch die Vorfilterung kann die Kommunikations- bzw. Arbeitslast des Automatisierungsgerätes 2 verringert werden.

Außerdem weist das Gerät 3 eine Regleroptimierungsfunktionalität auf, um die von den Feldgeräten 4a, 4b, 4c an das Automatisierungsgerät 2 gesendeten Daten in Vorbereitung auf eine in dem Automatisierungsgerät 2 nachfolgend vorzunehmende Regleroptimierung vorzuverarbeiten. Auch dadurch wird die Arbeitslast des Automatisierungsgerätes 2 verringert.

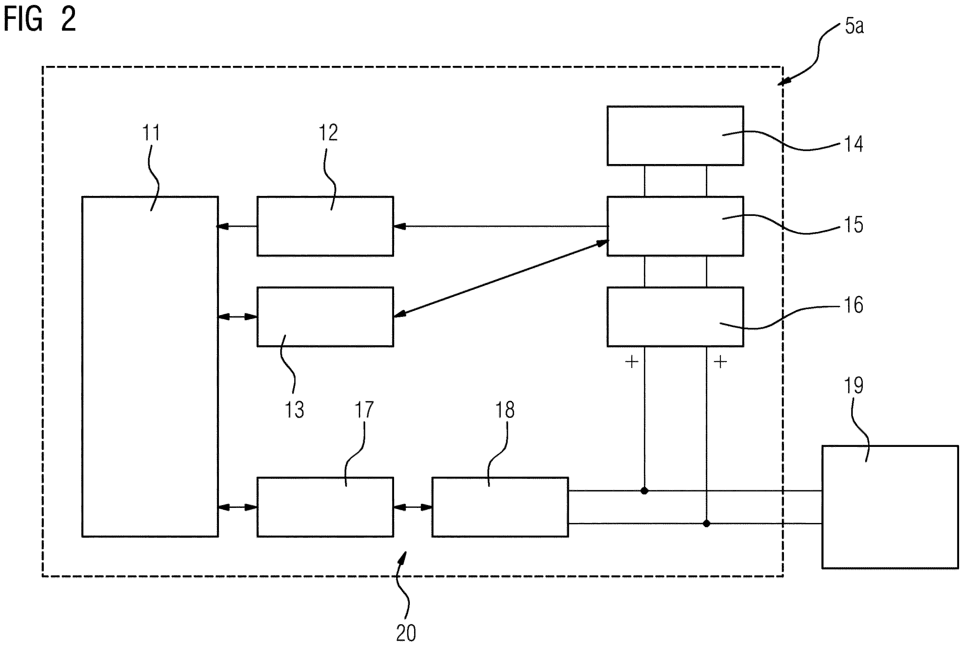

Eine Schnittstelle 5a der Schnittstellen 5a, 5b, 5c ist vorliegend als Stromschleifenschnittstelle ausgebildet, worauf anhand der Beschreibung von FIG 2 näher eingegangen wird. FIG 2 zeigt einen schematischen Aufbau der Schnittstelle 5a des Gerätes 3. Die Schnittstelle 5a umfasst eine Verarbeitungseinheit 11, einen Analog/Digital-Wandler 12, einen HART-Schaltungsblock 13, eine Gleichspannungsquelle 14, eine Strommesseinrichtung 15, einen Tiefpassfilter 16, eine APL-Einheit 17 und ein Abschlussnetzwerk 18.

Die Schnittstelle 5a kann zum einen als an sich bekannte APL-Schnittstelle für ein APL-fähiges Feldgerät 19 verwendet werden. Hierzu wird ein die APL-Einheit 17, das Abschlussnetzwerk 18, die Gleichspannungsquelle 14 und den Tiefpassfilter 16 umfassender APL-Kanal 20 verwendet.

Die Schnittstelle 5a ist auch als Stromschleifenschnittstelle, auch bekannt als 4...20mA Schnittstelle, ausgebildet. Hierzu misst die Strommesseinrichtung 15 den von dem Feldgerät 19 eingeprägten Strom mit einem Betrag zwischen 4 und 20 mA. Der Analog/Digital-Wandler 12 wandelt den gemessenen Stromwert in einen digitalen Signalwert und überträgt ihn an die Verarbeitungseinheit 11 zur weiteren Verarbeitung. Dabei können auch von dem Feldgerät 19 gemäß dem HART-Protokoll auf das Stromsignal zwischen dem Feldgerät 19 und dem Gerät 3 eingeprägte Daten decodiert und weiterverarbeitet werden. In umgekehrter Richtung erzeugt der HART-Schaltungsblock 13 entsprechende Modulationen für eine auf dem HART-Protokoll basierende Kommunikation in Richtung des Feldgerätes 19.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gerät (3), welches eine Mehrzahl von Schnittstellen (5a, 5b, 5c) zur Verbindung (6a, 6b, 6c) mit Feldgeräten (4a, 4b, 4c) einer technischen Anlage, insbesondere Prozess- oder Fertigungsanlage, auf Basis von Ethernet-APL und PROFINET aufweist, und welches eine Schnittstelle (7) zur Verbindung (8) mit einem übergeordneten Automatisierungsgerät (2) der technischen Anlage auf Basis von PROFINET aufweist, wobei das Gerät (3) dazu ausgebildet ist, als ein Kommunikationsswitch zwischen dem übergeordneten Automatisierungsgerät (2) und den Feldgeräten (4a, 4b, 4c) zu agieren,
**dadurch gekennzeichnet, dass**
das Gerät (3) dazu ausgebildet ist, im Rahmen der Verbindung (8) mit dem übergeordneten Automatisierungsgerät (2) als ein PROFINET IO-Device zu agieren, und im Rahmen der Verbindung (6a, 6b, 6c) mit den Feldgeräten (4a, 4b, 4c) als ein PROFINET IO-Controller zu agieren, um im Rahmen der Verbindungen (6a, 6b, 6c) mit den Feldgeräten (4a, 4b, 4c) und dem übergeordneten Automatisierungsgerät (2) als ein Ethernet-APL Gateway zu agieren.

2. Gerät (3) nach Anspruch 1, bei dem die Schnittstelle (7) zur Verbindung (8) mit dem übergeordneten Automatisierungsgerät (2) der technischen Anlage auf Basis einer PROFINET Konformitätsklasse A ausgebildet, und bei dem die Schnittstellen (5a, 5b, 5c) zur Verbindung (6a, 6b, 6c) mit den Feldgeräten (4a, 4b, 4c) auf Basis einer PROFINET Konformitätsklasse B ausgebildet sind.

3. Gerät (3) nach Anspruch 1 oder 2, bei dem das Automatisierungsgerät (2) eine speicherprogrammierbare Steuerung ist.

4. Gerät (3) nach einem der vorangegangenen Ansprüche, bei dem die Feldgeräte (4a, 4b, 4c) Sensoren und/oder Aktoren darstellen.

5. Gerät (3) nach einem der vorangegangenen Ansprüche, bei dem, insbesondere durch eine entsprechende Eingabe über eine Nutzerschnittstelle des Gerätes (3), vorgebbar ist, unter welchen Bedingungen eine HTTPS-Verbindung von dem Automatisierungsgerät (2) zu den Feldgeräten (4a, 4b, 4c) ermöglicht wird.

6. Gerät (3) nach einem der vorangegangenen Ansprüche, der eine Aggregator-Funktionalität aufweist, um eine Filterung der von den Feldgeräten (4a, 4b, 4c) an das Automatisierungsgerät (2) gesendeten Daten zu ermöglichen.

7. Gerät (3) nach Anspruch 6, bei dem die Aggregator-Funktionalität auf dem Einbezug eines neuronalen Netzes basiert.

8. Gerät (3) nach Anspruch 6 oder 7, das eine Regleroptimierungsfunktionalität aufweist, um die von den Feldgeräten (4a, 4b, 4c) an das Automatisierungsgerät (2) gesendeten Daten in Vorbereitung auf eine in dem Automatisierungsgerät (2) nachfolgend vorzunehmende Regleroptimierung vorzuverarbeiten.

9. Gerät (3) nach einem der vorangegangenen Ansprüche, welches wenigstens eine als Stromschleifenschnittstelle ausgebildete Schnittstelle (5a, 5b, 5c) zur Verbindung mit einem Feldgerät (4a, 4b, 4c) auf Basis eines von dem Feldgerät (4a, 4b, 4c) empfangenen elektrischen Stromes mit einer Stromstärke zwischen 4 und 20 mA aufweist.

10. Gerät (3) nach Anspruch 9, bei dem die Schnittstelle (5a, 5b, 5c) für eine Verbindung (6a, 6b, 6c) mit dem Feldgerät (4a, 4b, 4c) auf Basis des HART-Protokolls ausgebildet ist.

11. Automatisierungssystem (1), aufweisend ein Automatisierungsgerät (2) und ein Gerät (3) nach einem der vorangegangenen Ansprüche, wobei eine lösbare Verbindung (8) zwischen dem Automatisierungsgerät (2) und dem Gerät (3) auf Basis von PROFINET besteht.

12. Automatisierungssystem (1) nach Anspruch 11, welches eine Vielzahl von Feldgeräten (4a, 4b, 4c) aufweist, die mit den entsprechenden Schnittstellen (5a, 5b, 5c) des Gerätes (3) lösbar verbunden sind.

13. Verfahren zum Betrieb einer technischen Anlage, insbesondere Fertigungs- oder Prozessanlage, mit einem Gerät (3) nach einem der Ansprüche 1 bis 10.

14. Verfahren zum Betrieb einer technischen Anlage, insbesondere Fertigungs- oder Prozessanlage, mit einem Automatisierungssystem (1) nach Anspruch 11 oder 12.
